(19) Europäisches Patentamt
European Patent Office
Office européen des brevets

(11) **EP 3 385 665 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
***G01B 11/24*** *(2006.01)*   ***F16L 55/00*** *(2006.01)*

(21) Anmeldenummer: **18164103.6**

(22) Anmeldetag: **27.03.2018**

(54) **VERFAHREN UND VORRICHTUNG ZUR ÜBERPRÜFUNG DER VORMONTAGE EINES SCHNEIDRINGS AUF EINEM ROHR**

METHOD AND DEVICE FOR CHECKING THE PRE-ASSEMBLY OF A CUTTING RING ON A PIPE

PROCÉDÉ ET DISPOSITIF DE VÉRIFICATION DU PRÉMONTAGE D'UNE BAGUE DE COUPE SUR UN TUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2017 DE 102017107173**

(43) Veröffentlichungstag der Anmeldung:
**10.10.2018 Patentblatt 2018/41**

(73) Patentinhaber: **VOSS Fluid GmbH**
**51688 Wipperfürth (DE)**

(72) Erfinder:
• **REMPEL, Georg**
**51709 Marienheide (DE)**
• **KONNERTH, Marius**
**51789 Lindlar (DE)**

• **PAPENHOFF, Heinz-Werner**
**45527 Hattingen (DE)**

(74) Vertreter: **Patent- und Rechtsanwälte**
**Dr. Solf & Zapf**
**Schlossbleiche 20**
**42103 Wuppertal (DE)**

(56) Entgegenhaltungen:
**EP-A1- 2 828 565      US-A- 6 111 601**
**US-A1- 2002 041 381**

• **VOSSFluid: "Vormontage VOSS ES-4 - German", youtube, 12. Mai 2011 (2011-05-12), Seite 2 pp., XP054978391, Gefunden im Internet: URL:https://www.youtube.com/watch?v=bQxiY X 4EblE [gefunden am 2018-06-04]**

**Beschreibung**

Die Erfindung betrifft ein Verfahren zur Überprüfung, insbesondere zur optischen Überprüfung, der Vormontage eines Schneidrings sowie eine Vorrichtung zur Überprüfung der Vormontage eines Schneidrings.

Eine Schneidringverschraubung weist im Allgemeinen einen Anschlussstutzen, eine auf den Anschlussstutzen aufschraubbare Überwurfmutter sowie einen zwischen Anschlussstutzen und Überwurfmutter angeordneten Schneidring auf. Vor der abschließenden Montage einer Schneidringverschraubung wird der Schneidring zunächst auf dem Rohr, insbesondere an einer definierten Position in dessen Endbereich, vormontiert. Während der Vormontage dringt zumindest eine Schneidfläche des Schneidrings zumindest teilweise in die Oberfläche des Rohres ein.

Die Qualität der Schneidringverschraubung kann in erheblichem Maße durch die Vormontage beeinflusst werden. Wesentliche qualitätsbestimmende Faktoren sind der Schneidweg in axialer Richtung, die Schneidtiefe in radialer Richtung, der Abstand zwischen Schneidringoberkante und Stirnseite sowie die Ausrichtung des Rohres innerhalb des Montagestutzens.

Zur Sicherung der Qualität der Schneidringverschraubung wird der auf dem Rohr vormontierte Schneidring nach der Vormontage üblicherweise visuell durch das Montagepersonal überprüft sowie stichprobenartig die Lage des Schneidrings in Bezug auf das Rohr überprüft, beispielsweise mit einer mechanischen Prüflehre.

Aus dem Youtube Video VOSSFluid: "Vormontage VOSS ES-4-German" (https://www.youtube.com/watch?v=bQxiYX4Eb1E) ist ein Verfahren zur Überprüfung der Vormontage eines Schneidrings auf einem Rohr bekannt, wobei die Kontrolle des korrekten Montageergebnisses eines vormontierten Schneidrings von einem Monteur visuell und taktil ausgeführt wird.

Die aus dem Stand der Technik bekannten Verfahren und Vorrichtungen weisen allerdings den Nachteil auf, dass keine vollständige Überprüfung jeglicher vormontierter Schneidringe möglich ist und zudem keine gleichbleibende Prozessqualität sichergestellt werden kann.

Der vorliegenden Erfindung liegt deshalb die Aufgabe zugrunde, ein Verfahren und eine Vorrichtung zur Überprüfung der Vormontage eines Schneidrings auf einem Rohr anzugeben, mit denen eine gleichbleibende Prozessqualität gewährleistet und eine vollständige Überprüfung aller Vormontagen ermöglicht werden kann.

Die vorgenannte Aufgabe wird erfindungsgemäß durch ein Verfahren mit den Merkmalen des Patentanspruchs 1 sowie eine Vorrichtung mit den Merkmalen des Patentanspruchs 15 gelöst. Das Verfahren zur Überprüfung der Vormontage eines Schneidrings auf einem Rohr wird insbesondere mit einer Vorrichtung mit mindestens einer optischen Erfassungseinrichtung zum Erfassen von Bilddaten in einem Erfassungsbereich durchgeführt. Das Verfahren weist dabei mindestens die nachfolgenden Verfahrensschritte auf:

- Erfassen von mindestens ersten Bilddaten mindestens eines zumindest teilweise in den Erfassungsbereich eingebrachten Rohres mit vormontiertem Schneidring,

- Auswerten mindestens eines Teils der ersten Bilddaten in Bezug auf eine Lage des Schneidrings zum Rohr und/oder geometrische Veränderungen des Rohres und/oder geometrische Veränderungen des Schneidrings.

Zunächst erfolgt grundsätzlich eine, hinreichend aus dem Stand der Technik bekannte, Vormontage eines Schneidrings auf einem Rohr, insbesondere in dessen Endbereich. Nach der Vormontage wird das Rohr mit dem Schneidring zumindest teilweise in den Erfassungsbereich der Vorrichtung gebracht, so dass erste Bilddaten, beispielsweise zu einem ersten Auslösezeitpunkt, erfasst werden können.

Die erfassten ersten Bilddaten werden zumindest teilweise von der Vorrichtung ausgewertet, insbesondere um daraus die Lage des Schneidrings in Bezug auf das Rohr und/oder geometrische Veränderungen des Rohres und/oder geometrische Veränderungen des Schneidrings zu bestimmen.

Zum Auswerten der ersten Bilddaten umfasst die Vorrichtung eine Datenverarbeitungseinrichtung, mit der die Auswerteschritte an den Bilddaten vollzogen werden können. Insbesondere umfasst die Datenverarbeitungseinrichtung auch Mittel zum temporären und/oder dauerhaften Speichern von Bilddaten und/oder eine Datenbank mit Referenzdaten, die für einen Vergleich mit tatsächlich gemessenen und/oder berechneten Werten herangezogen werden können.

Vorzugsweise weist die optische Erfassungseinrichtung eine digitale Kamera auf, insbesondere mit mindestens 5 Megapixeln, bevorzugt mit einer Pixelgenauigkeit von 4,8 $\mu$m, so dass die von der Erfassungseinrichtung detektierten elektromagnetischen Strahlen in Bilddaten umgewandelt werden können.

Anhand der Auswertung der ersten Bilddaten kann auf die Qualität der Vormontage, also auf die Qualität der Verbindung zwischen dem Schneidring und dem Rohr geschlossen werden, insbesondere indem die Lage des Schneidrings zum Rohr ermittelt wird und/oder geometrische Veränderungen des Rohres, und/oder geometrische Veränderungen des Schneidrings, erfasst und ausgewertet werden. Anhand vorgebbarer Toleranzbereiche kann eine Beurteilung der Vormontage erfolgen, beispielsweise eine Vormontage als "gut" oder "Ausschuss" bewertet werden

Das erfindungsgemäße Verfahren weist den Vorteil auf, dass es schnell durchgeführt werden kann, so dass sämtliche vormontierte Schneidringe bzw. Rohre überprüft werden können. Zudem gewährleistet es durch die Auswertung von Bilddaten eine objektiv bestimmbare Prozessqualität.

Insbesondere um die Qualität der erfassten Bilddaten zu steigern, ist gemäß einer ersten Ausgestaltung des Verfahrens vorgesehen, dass die Vorrichtung eine Beleuchtungseinrichtung aufweist, insbesondere eine telezentrische Beleuchtungseinrichtung, und dass zumindest während des Erfassens der ersten Bilddaten eine zumindest teilweise Beleuchtung des Rohres und/oder des Schneidrings mit der Beleuchtungseinrichtung erfolgt. Vorzugsweise ist die Beleuchtungseinrichtung derart angeordnet, dass die Beleuchtungseinrichtung auf die Erfassungseinrichtung ausgerichtet ist, so dass der Erfassungsbereich zwischen der Beleuchtungseinrichtung und der Erfassungseinrichtung angeordnet ist. Mit einer derartigen Anordnung der Beleuchtungseinrichtung können besonders bevorzugt die Konturen des eingebrachten Rohres und/oder des Schneidrings erfasst werden.

Als besonders vorteilhaft hat sich eine telezentrische Beleuchtungseinrichtung herausgestellt, da die telezentrische Beleuchtungseinrichtung nur paralleles Licht - also Licht mit einem Neigungswinkel von 0° gegen die optische Achse - zur Verfügung stellt. Die telezentrische Beleuchtungseinrichtung weist folglich den Vorteil auf, dass sie ein homogenes Leuchtfeld bereitstellt.

Durch die telezentrische Beleuchtungseinrichtung werden die relevanten Bildinformationen auf den Schattenwurf des Objektes bzw. die einzelnen Objektkonturen reduziert, wodurch die Lage des Schneidrings zum Rohr und/oder geometrische Veränderungen des Rohres und/oder geometrische Veränderungen des Schneidrings aus den Bilddaten ermittelt werden können.

Besonders vorteilhaft kann die Qualität der erfassten Bilddaten dadurch weiter gesteigert werden, dass die Erfassungseinrichtung gemäß einer weiteren Ausgestaltung ein telezentrisches Objektiv aufweist. Durch das telezentrische Objektiv wird ermöglicht, das Rohr und/oder den Schneidring ohne perspektivische Verzerrung zu erfassen. Die Eintrittspupille des Objektivs liegt im Unendlichen, so dass die Hauptstrahlen parallel zur optischen Achse laufen. Folglich ändert sich der Abbildungsmaßstab bei größerem Abstand zum Objekt der Erfassungseinrichtung nicht.

Als besonders vorteilhaft hat sich gemäß einer weiteren Ausgestaltung des Verfahrens zudem herausgestellt, wenn als geometrische Veränderung des Rohres mindestens eine durch das Vormontieren des Schneidrings entstandene Verformung des Rohres zumindest teilweise analysiert wird, insbesondere ein durch den Schneidring erzeugter Materialaufwurf des Rohres zumindest teilweise analysiert wird.

Wenn der Schneidring bei der Vormontage auf das Rohr aufgebracht wird, schneidet der Schneidring zumindest teilweise in die Oberfläche des Rohres ein, wodurch sich an der Schneidfläche des Schneidrings ein Materialaufwurf, der auch Bundaufwurf genannt wird, ausbildet. Im Rahmen der Erfassung der geometrischen Veränderungen wird nun die Verformung, insbesondere der vorgenannte Materialaufwurf analysiert, beispielsweise ein prozentuales Ausmaß, eine Höhe und/oder eine Breite der Verformung ermittelt und dadurch Rückschlüsse auf die Qualität der Vormontage des Schneidrings auf dem Rohr getroffen. Dabei ist zu berücksichtigen, dass sowohl ein zu geringes Ausmaß der Verformung ein Zeichen für eine unzureichende Vormontage sein kann, als auch ein sehr großes Ausmaß der Verformung.

Besonders bevorzugt ist gemäß einer weiteren Ausgestaltung, wenn im Rahmen der Analyse der Verformung, insbesondere des Materialaufwurfs, der Grad der Abdeckung einer vorderen Schneidringfläche durch die Verformung, insbesondere durch den Materialaufwurf, bestimmt wird. Die Verformung bzw. der Materialaufwurf des Rohres ist in den ersten Bilddaten identifizierbar, so dass in den ersten Bilddaten ebenfalls identifizierbar ist, in welchem Umfang, also zu welchem Grad, sich der Materialaufwurf bzw. die Verformung über eine vordere Schneidringfläche geschoben hat.

Dabei hat es sich als vorteilhaft herausgestellt, wenn eine Überdeckung einer vorderen Schneidringfläche zwischen 70% und 90% durch die Verformung bzw. den Materialaufwurf als Kriterium für eine gute Vormontage herangezogen wird. Ein darüber- oder darunterliegender Überdeckungsanteil ist vorzugsweise ein Ausschusskriterium. Beispielsweise entspricht ein Wert von 80% einer Überdeckung der vorderen Schneidringfläche zu 80% ihrer Gesamtfläche.

Gemäß einer weiteren Ausgestaltung ist ferner vorgesehen, dass die ersten Bilddaten ein Schattenbild zumindest eines Teils des Rohres und zumindest eines Teils des Schneidrings beinhalten, und dass zur Auswertung zumindest ein Teil der Kontur des Schneidrings und/oder des Rohres im Schattenbild ausgewertet wird.

Durch das telezentrische Objektiv und/oder die telezentrische Beleuchtung lassen sich die Konturen des Schneidrings und des Rohres in den ersten Bilddaten besonders vorteilhaft darstellen. Deshalb hat es sich als vorteilhaft herausgestellt, die Auswertung der ersten Bilddaten insbesondere auf die Konturen des Schneidrings und/oder des Rohres zu konzentrieren. Beispielsweise wird in der Kontur des Rohres bzw. des Schneidrings die zuvor beschriebene Verformung bzw. der Materialaufwurf erkannt und dessen prozentuales Ausmaß - der Grad der Verformung - in der Kontur ausgewertet.

Eine Weiterbildung des Verfahrens sieht zudem vor, dass das Auswerten der ersten Bilddaten ferner folgende Verfahrensschritte aufweist:

- Auffinden einer durch den Schneidring erzeugten Verformung des Rohres, insbesondere eines Materialaufwurfes, insbesondere in der Kontur des Rohres,

- Definieren eines Auswertebereiches, der die Verformung, insbesondere den Materialaufwurf, beinhaltet,

- Analyse des Auswertebereiches, insbesondere in Bezug auf das Vorhandensein von Bildpixeln,

- Bestimmung eines Verformungswertes, insbesondere eines Materialaufwurfwertes.

Gemäß der vorbeschriebenen Weiterbildung des Verfahrens wird folglich zunächst anhand markanter Punkte in den Bilddaten, beispielsweise markanter Kanten des Schneidrings und/oder des Rohres, der Materialaufwurf bzw. die Verformung des Rohres aufgefunden. Insbesondere wird das gesamte Profil des Schneidrings an einer Seite in der Kontur ausgewertet, um mindestens einen Referenzpunkt, vorzugsweise eine Mehrzahl an Referenzpunkten, festzulegen. Anschließend wird ein Auswertebereich, insbesondere dessen Lage anhand mindestens eines festgelegten Abstandes zu dem mindestens einen ermittelten Referenzpunkt und/oder die Größe des Auswertebereichs, definiert, der im Bereich der Außenkontur des Rohres bzw. des Schneidrings liegt, und der so angeordnet ist, dass er die Verformung bzw. den Materialaufwurf beinhaltet, insbesondere ausschließlich die Verformung bzw. den Materialaufwurf beinhaltet. Nachfolgend erfolgt eine softwaregestützte Analyse des Auswertebereiches, insbesondere indem der Auswertebereich in Bezug auf das Vorhandensein von Bildpixeln ausgewertet wird, bevorzugt die Bildpixel im Auswertebereich gezählt werden. Das ist insbesondere dann vorteilhaft, wenn der Auswertebereich ausschließlich die Verformung bzw. den Materialaufwurf beinhaltet, so dass durch Zählung der Bildpixel und/oder flächenmäßige Auswertung des Auswertebereiches auf das Ausmaß der Verformung bzw. das Ausmaß des Materialaufwurfes geschlossen werden kann.

Auf Basis der flächenmäßigen Anteile der Verformung bzw. des Materialaufwurfes und/oder der Anzahl der Bildpixel, die dem Materialaufwurf bzw. der Verformung in der Kontur des Rohres und/oder des Schneidrings zugeordnet werden, wird ein Verformungswert gebildet, der als Gütekriterium für die Qualität der Vormontage herangezogen werden kann. Insbesondere wird ein Materialaufwurfwert gebildet, der vorzugsweise das Ausmaß der Abdeckung einer vorderen Schneidfläche des Schneidrings in Prozent wiedergibt.

Gemäß einer weiteren Ausgestaltung des Verfahrens ist vorgesehen, dass der ermittelte Verformungswert bzw. der ermittelte Materialaufwurfwert mit mindestens einem in einer Datenbank gespeicherten Verformungswert, insbesondere mindestens einem in einer Datenbank gespeicherten Materialaufwurfwert und/oder einem gespeicherten Bereich von Verformungswerten bzw. einem gespeicherten Bereich von Materialaufwurfwerten verglichen wird. Durch das Vergleichen kann überprüft werden, ob der aktuell vorliegende Verformungswert bzw. Materialaufwurfwert einen Schwellenwert über- oder unterschreitet und/oder in einen vorbestimmten Toleranzbereich fällt.

Besonders bevorzugt erfolgt nach dem Vergleichen des Verformungswertes mit einem Referenzwert oder einem Toleranzbereich die Ausgabe eines Gütesignals mit einer Ausgabeeinrichtung, beispielsweise einer grafische Anzeige, zum Beispiel rot oder grün, oder die Ausgabe eines grafischen Ladebalkens oder einer sonstigen grafischen Anzeige, die den Benutzer erkennen lässt, dass die Vormontage die vordefinierten Qualitätsanforderungen erreicht oder nicht erreicht hat.

Insbesondere um neben den geometrischen Eigenschaften des Rohres bzw. des Schneidrings, insbesondere in Form der Verformung bzw. des Materialaufwurfes und/oder die Lage des Schneidrings in Bezug auf das Rohr zu ermitteln, ist gemäß einer weiteren Ausgestaltung vorgesehen, dass das Auswerten zumindest eines Teils der ersten Bilddaten, insbesondere in Bezug auf eine Lage des Schneidrings zum Rohr, folgende Verfahrensschritte aufweist:

- Ermitteln der Lage einer Stirnkante des Rohres in den ersten Bilddaten,

- Ermitteln mindestens einer ersten Kante, insbesondere in der Kontur des Schneidrings in den ersten Bilddaten, bevorzugt der Dichtfläche des Schneidrings in der Kontur,

- Messen eines ersten, insbesondere lotrechten, Abstandes zwischen der Stirnkante des Rohres und mindestens einem ersten Punkt auf der ersten Kante des Schneidrings.

Das Ermitteln der Lage der Stirnkante, das Ermitteln der ersten Kante des Schneidrings sowie das Messen eines insbesondere lotrechten Abstandes zwischen der Stirnkante des Rohres und mindestens einem ersten Punkt auf der ersten Kante des Schneidrings erfolgt in den ermittelten ersten Bilddaten. Der erste Punkt kann insbesondere ein markanter Punkt, z.B. ein Eckbereich, in der Kontur des Schneidrings sein, so dass von dem Abstand des Punktes zur Stirnkante des Rohres, insbesondere zu einer Ebene, in der die Stirnfläche des Rohres angeordnet ist, auf die Position des Schneidrings in Bezug auf das Rohr geschlossen werden kann. Insbesondere ist vorgesehen, dass in den Bilddaten, insbesondere in der Kontur an mindestens einer Seite, der Eckbereich zwischen Rohraußenwand und Schneidring und/oder die Dichtfläche des Schneidrings aufgefunden und mindestens ein Bezugspunkt definiert wird.

Als besonders vorteilhaft hat sich jedoch herausgestellt, wenn gemäß einer weiteren Ausgestaltung vorgesehen ist, dass die erste Kante des Schneidrings zumindest einen Teil der Dichtfläche des Schneidrings beinhaltet, wobei ferner folgende Verfahrensschritte durchgeführt werden:

- Ermitteln eines ersten Durchmessers des Schneidrings am ersten Punkt innerhalb der ersten Bilddaten,

- Ermitteln eines Neigungswinkels, insbesondere des Neigungswinkels a, der ersten Kante im ersten Punkt zur Rohrlängsachse, indem der Neigungswinkel in den ersten Bilddaten gemessen wird,

- Berechnen eines ersten radialen Abstandes zwischen dem ersten Punkt und einem maximalen Kegeldurchmesser eines Verschraubungsstutzens für den Schneidring, insbesondere indem der gemessene erste Durchmesser am ersten Punkt von einem, insbesondere genormten, maximalen Kegeldurchmesser subtrahiert und das Ergebnis durch zwei geteilt wird,

- Berechnen eines ersten Abstands des ersten Punktes zur Oberkante der Dichtfläche unter Berücksichtigung des Neigungswinkels $\alpha$ der ersten Kante zur Rohrlängsachse und dem radialen Abstand, insbesondere mit der Tangensfunktion, so dass anschließend ein Berechnen einer Eindringtiefe des Schneidrings aus der Summe des lotrechten Abstandes des ersten Punktes zur Stirnkante des Rohres und des Abstandes des ersten Punktes zur Oberkante der Dichtfläche erfolgt.

Die Eindringtiefe wird mit einem Referenzwert verglichen und liefert eine Aussage darüber, wie weit das Rohr mit dem vormontierten Schneidring in einen Verschraubungsstutzen eindringen würde. Der Vergleich mit dem Referenzwert und/oder einem Toleranzbereich ermöglicht eine zuverlässige Aussage über die Qualität der Vormontage und damit darüber, ob es sich bei der Vormontage um Ausschuss oder einen den Anforderungen entsprechend auf dem Rohr montierten Schneidring handelt.

Der für die Berechnung verwendete, vom Außendurchmesser des Rohres abhängige, insbesondere genormte, maximale Kegeldurchmesser ergibt sich aus der DIN EN ISO 8434-1 (Stand 1.09.2007) als Wert $d_7$ und aus der nachfolgenden Tabelle 1:

Tabelle 1

| | | DIN EN ISO 8434-1 (Stand 1.09.2007) | |
|---|---|---|---|
| Reihe | Rohr AD | Konus ø d7, +0,1 | Konus ø D1, -0,02 |
| LL | 4 | 5 | 5,05 |
| | 5 | 6,5 | 6,55 |
| | 6 | 7,5 | 7,55 |
| | 8 | 9,5 | 9,55 |
| L | 6 | 8,1 | 8,15 |
| | 8 | 10,1 | 10,15 |
| | 10 | 12,3 | 12,35 |
| | 12 | 14,3 | 14,35 |
| | 15 | 17,3 | 17,35 |
| | 18 | 20,3 | 20,35 |
| | 22 | 24,3 | 24,35 |
| | 28 | 30,3 | 30,35 |
| | 35 | 38 | 38,05 |
| | 42 | 45 | 45,05 |

(fortgesetzt)

|  |  | DIN EN ISO 8434-1 (Stand 1.09.2007) |  |
|---|---|---|---|
| Reihe | Rohr AD | Konus ø d7, +0,1 | Konus ø D1, -0,02 |
| S | 6 | 8,1 | 8,15 |
|  | 8 | 10,1 | 10,15 |
|  | 10 | 12,3 | 12,35 |
|  | 12 | 14,3 | 14,35 |
|  | 14 | 16,3 | 16,35 |
|  | 16 | 18,3 | 18,35 |
|  | 20 | 22,9 | 22,95 |
|  | 25 | 27,9 | 27,95 |
|  | 30 | 33 | 33,05 |
|  | 38 | 41 | 41,05 |

In der Tabelle 1 sind LL das Kennzeichen für die sehr leichte Baureihe, L das Kennzeichen für die leichte Baureihe, S das Kennzeichen für die schwere Baureihe. AD gibt den Außendurchmesser des Rohres an. Der $d_7$-Wert und der D1-Wert sind Werte für den maximalen Kegeldurchmesser mit den zugehörigen Toleranzen. Für die Berechnung kann der jeweilige Wert ohne Toleranz verwendet werden. Der $d_7$-Wert ergibt sich aus der Norm und kann als Wert, als D1-Wert, für den maximalen Kegeldurchmesser verwendet werden. Alternativ kann der maximale Kegeldurchmesser, der D1-Wert, aus der rechten Spalte der Tabelle 1 entnommen werden.

Als besonders vorteilhaft hat sich ferner herausgestellt, wenn die vorgenannten Schritte nicht lediglich an einem ersten Punkt durchgeführt werden, sondern gleichermaßen für mindestens einen weiteren, zweiten Punkt, insbesondere für einen weiteren, dritten Punkt, wobei der zweite und der dritte Punkt vom ersten Punkt verschieden sind. Der erste Punkt und/oder der zweite Punkt und/oder der dritte Punkt können beliebig auf der ersten Kante, insbesondere der Dichtfläche, festgelegt werden, beispielsweise der erste und der dritte Punkt an den äußeren Rändern und der zweite Punkt in der Mitte oder alle drei Punkte, bevorzugt ausgehend von einem Punkt in der Mitte, mit gleichem Abstand zueinander.

Ferner ist auch eine Ausgestaltung vorgesehen, bei der die vorgenannten Schritte für drei verschiedene Punkte auf der ersten Kante des Schneidrings und die vorgenannten Schritte ebenfalls für drei weitere Punkte auf einer zweiten, der ersten Kante in der Kontur des Schneidrings gegenüberliegenden Kante durchgeführt werden. In der Kontur handelt sich bei der gegenüberliegenden Kante um die zweite sichtbare Kante der Dichtfläche des Schneidrings in der Kontur. Ausgehend von jedem der drei bzw. sechs Punkte wird jeweils eine Eindringtiefe - wie beschrieben - berechnet.

Als besonders vorteilhaft hat es sich zudem herausgestellt, wenn aus den drei bzw. sechs ermittelten Eindringtiefen eine gemittelte Eindringtiefe $L_M$ - arithmetisches Mittel - berechnet wird, die dann vorzugsweise mit einem Referenzwert oder einem Toleranzbereich verglichen wird. Durch den Vergleich mit einem Referenzwert oder einem Toleranzbereich lässt sich dann eine Aussage über die Qualität der Vormontage treffen.

Erfindungsgemäße Toleranzbereiche für die gemittelte Eindringtiefe $L_M$ für verschiedene Rohrdurchmesser ergeben sich aus der nachfolgenden Tabelle 2:

Tabelle 2

| Größe | Eindringtiefe T5 gemäß DIN EN ISO 8434-1 (Stand 1.09.2007) | | Eindringtiefe $L_M$ | |
|---|---|---|---|---|
|  | (T5) Min. | (T5) Max. | ($L_M$) Min. | ($L_M$) Max. |
| L6 | 7,00 | 7,30 | 6,80 | 7,20 |
| S6 | 7,00 | 7,30 | 6,80 | 7,20 |
| L8 | 7,00 | 7,30 | 6,70 | 7,20 |
| S8 | 7,00 | 7,30 | 6,70 | 7,20 |
| L10 | 7,00 | 7,30 | 6,50 | 7,20 |

(fortgesetzt)

| Größe | Eindringtiefe T5 gemäß DIN EN ISO 8434-1 (Stand 1.09.2007) | | Eindringtiefe $L_M$ | |
|---|---|---|---|---|
| | (T5) Min. | (T5) Max. | ($L_M$) Min. | ($L_M$) Max. |
| S10 | 7,50 | 7,80 | 7,20 | 7,70 |
| L12 | 7,00 | 7,30 | 6,40 | 7,20 |
| S12 | 7,50 | 7,80 | 7,10 | 7,70 |
| S14 | 8,00 | 8,30 | 7,70 | 8,20 |
| L15 | 7,00 | 7,30 | 6,60 | 7,20 |
| S16 | 8,50 | 8,80 | 8,20 | 8,70 |
| L18 | 7,50 | 7,80 | 7,10 | 7,70 |
| S20 | 9,50 | 9,80 | 8,90 | 9,70 |
| L22 | 7,50 | 7,80 | 7,10 | 7,70 |
| S25 | 12,00 | 12,30 | 11,4 | 12 |
| L28 | 7,50 | 7,80 | 6,8 | 7,5 |
| S30 | 13,50 | 13,80 | 12,8 | 13,5 |
| L35 | 10,50 | 10,80 | 9,8 | 10,5 |
| S38 | 16,00 | 16,30 | 15,1 | 16 |
| L42 | 11,00 | 11,30 | 10 | 10,8 |

In der Tabelle 2 sind L das Kennzeichen für die leichte Baureihe, S das Kennzeichen für die schwere Baureihe, jeweils unter Angabe des Rohrdurchmessers in mm. Als Referenzwert zum Vergleich der Eindringtiefen oder der gemittelten Eindringtiefe kann der Wert T5 aus der DIN EN ISO 8434-1 (Stand 1.09.2007) oder der $L_M$-Wert aus der Tabelle 2 verwendet werden. Der Min- und der Max-Wert geben jeweils den Toleranzbereich für eine Vormontage an, die den Anforderungen entspricht. Ein berechneter Wert für $L_M$, der innerhalb des jeweiligen Toleranzbereiches liegt, ist also ein Kennzeichen für eine den Anforderungen entsprechende Vormontage.

Vorzugsweise ist gemäß einer Weiterbildung zudem vorgesehen, dass mit der gemittelten Eindringtiefe $L_M$ und einer schneidringspezifischen, idealen Eindringtiefe L eine Spalthöhe M berechnet wird, indem die gemittelte Eindringtiefe von der idealen Eindringtiefe subtrahiert wird. Je näher sich die Spalthöhe M dem Wert Null annähert, desto besser ist die Qualität der Vormontage zu beurteilen.

Die eingangs genannte Aufgabe ist ferner gelöst durch eine Vorrichtung zur Überprüfung der Vormontage eines Schneidrings, aufweisend mindestens eine Erfassungseinrichtung und mindestens eine Beleuchtungseinrichtung, wobei die Beleuchtungseinrichtung auf die Erfassungseinrichtung ausgerichtet ist, so dass zwischen der Beleuchtungseinrichtung und der Erfassungseinrichtung ein Erfassungsbereich ausgebildet ist, und dass mit der Vorrichtung Bilddaten eines im Erfassungsbereich anordenbaren Rohres mit vormontiertem Schneidring erfassbar sind, wobei die Vorrichtung zum Auswerten zumindest eines Teils der ersten Bilddaten in Bezug auf eine Lage des Schneidrings zum Rohr und/oder geometrische Veränderungen des Rohres und/oder geometrische Veränderungen des Schneidrings eingerichtet und ausgebildet ist.

Die Vorrichtung ist insbesondere zur Durchführung eines Verfahrens nach einem der vorgenannten Ausführungsbeispiele ausgebildet und eingerichtet.

Ferner hat sich bei der Vorrichtung als vorteilhaft herausgestellt, wenn vorgesehen ist, dass die Erfassungseinrichtung als Kamera mit einer Auflösung von mindestens 5 Megapixeln, insbesondere mit einer Pixelgenauigkeit zwischen 3 μm und 6μm, besonders bevorzugt 4,8 μm, ausgebildet ist.

Zudem ist es gemäß einer letzten Ausgestaltung der Vorrichtung vorteilhaft, wenn die Erfassungseinrichtung ein telezentrisches Objektiv aufweist und/oder die Beleuchtungseinrichtung als telezentrische Beleuchtungseinrichtung ausgebildet ist.

Die Erfindung betrifft ferner ein Computerprogrammprodukt zur Durchführung des beschriebenen Verfahrens. Zudem ist insbesondere eine Vormontagevorrichtung zur Vormontage eines Schneidrings an einem Rohr vorgesehen, die mit einer vorbeschriebenen Vorrichtung ausgestattet ist, so dass unmittelbar mit und/oder anschließend an den abgeschlossenen Vormontageprozess eine Überprüfung der Vormontage erfolgen kann.

Weitere vorteilhafte Ausgestaltungen der Erfindung ergeben sich aus der folgenden Figurenbeschreibung und den abhängigen Unteransprüchen. Es zeigen:

Fig. 1 ein schematisches Ablaufdiagramm eines Ausführungsbeispiels des erfindungsgemäßen Verfahrens,

Fig. 2 ein schematisches Ablaufdiagramm eines weiteren Ausführungsbeispiels eines erfindungsgemäßen Verfahrens,

Fig. 3 ein schematisches Ablaufdiagramm eines weiteren Ausführungsbeispiels eines erfindungsgemäßen Verfahrens,

Fig. 4 einen schematischen Aufbau der Vorrichtung,

Fig. 5 eine beispielhafte Darstellung der ersten Bilddaten,

Fig. 6 eine beispielhafte Darstellung des Auswertebereiches in den ersten Bilddaten gemäß Fig. 5,

Fig. 7 ein Ausführungsbeispiel eines teilweise dargestellten, vormontierten Schneidrings auf einem Rohr in einem Vormontagestutzen,

Fig. 8 ein weiteres Ausführungsbeispiel eines vormontierten Schneidrings auf einem Rohr in einem Vormontagestutzen.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

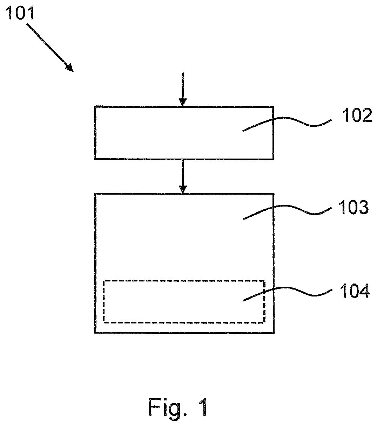

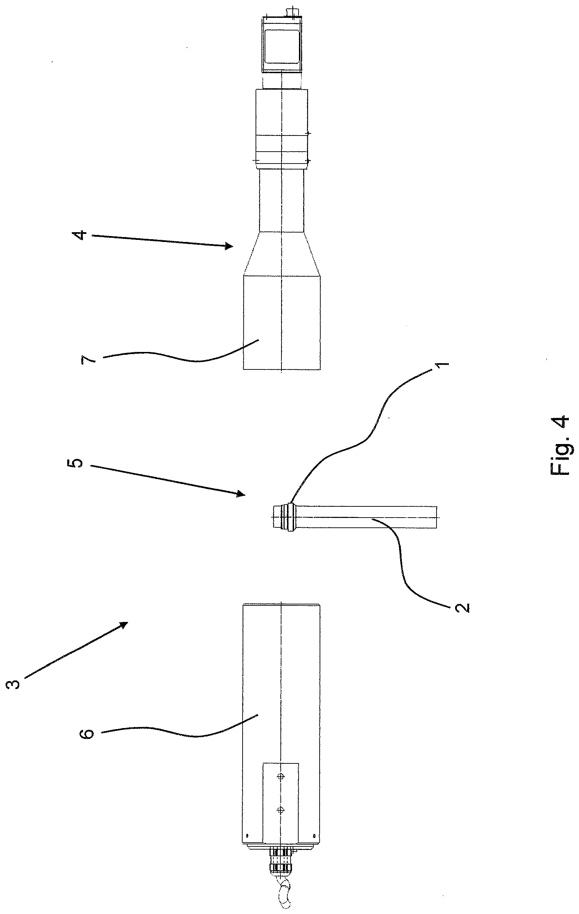

Fig. 1 zeigt den schematischen Ablauf eines Ausführungsbeispiels eines Verfahrens 101 zur Überprüfung der Vormontage eines beispielhaft in Fig. 4 gezeigten Schneidrings 1 auf einem Rohr 2, also zur Überprüfung, ob die Eigenschaften der durch den Vormontageprozess erzielten Verbindung zwischen Schneidring 1 und Rohr 2 den Anforderungen entspricht, um eine dichte Schneidringverschraubung - nicht dargestellt - und die notwendigen Anzugskräfte für das Rohr 2 zu erreichen. Das Verfahren 101 wird mit einer Vorrichtung 3 durchgeführt, die mindestens eine optische Erfassungseinrichtung 4 zum Erfassen 102 von Bilddaten in einem Erfassungsbereich 5 aufweist (siehe Fig. 4).

Gemäß Fig. 1 umfasst das Verfahren 101 mindestens die nachfolgend beschriebenen Verfahrensschritte, nämlich zunächst ein Erfassen 102 von mindestens ersten Bilddaten mindestens eines zumindest teilweise in den Erfassungsbereich 5 eingebrachten Rohres 2 mit vormontiertem Schneidring 1. Anschließend erfolgt ein Auswerten 103 zumindest eines Teils der ersten Bilddaten in Bezug auf eine Lage des Schneidrings 1 zum Rohr 2 und/oder geometrischer Veränderungen des Rohres 2 und/oder geometrischer Veränderungen des Schneidrings 1. Auf Basis der Ergebnisse der zumindest teilweise ausgewerteten ersten Bilddaten kann eine Aussage über die Qualität der Vormontage des Schneidrings 1 auf dem Rohr 2 getroffen werden, nämlich ob das Rohr 2 mit dem vormontierten Schneidring 1 für eine - nicht dargestellte - Schneidringverschraubung verwendbar ist oder ob es sich um Ausschuss handelt.

Fig. 4 zeigt ein Ausführungsbeispiel einer Vorrichtung 3 zur Überprüfung der Vormontage eines Schneidrings 1 auf einem Rohr 2. Die in Fig. 4 dargestellte Vorrichtung 3 weist eine Beleuchtungseinrichtung 6 auf, bei der es sich bei diesem Ausführungsbeispiel um eine telezentrische Beleuchtungseinrichtung 6 handelt. Mit der Beleuchtungseinrichtung 6 erfolgt zumindest während des Erfassens 102 der ersten Bilddaten eine Beleuchtung des Rohres 2 und des Schneidrings 1. Die Erfassungseinrichtung 4 umfasst ferner ein telezentrisches Objektiv 7, mit dem das Rohr 2 und der Schneidring 1 ohne Verzerrung erfassbar sind.

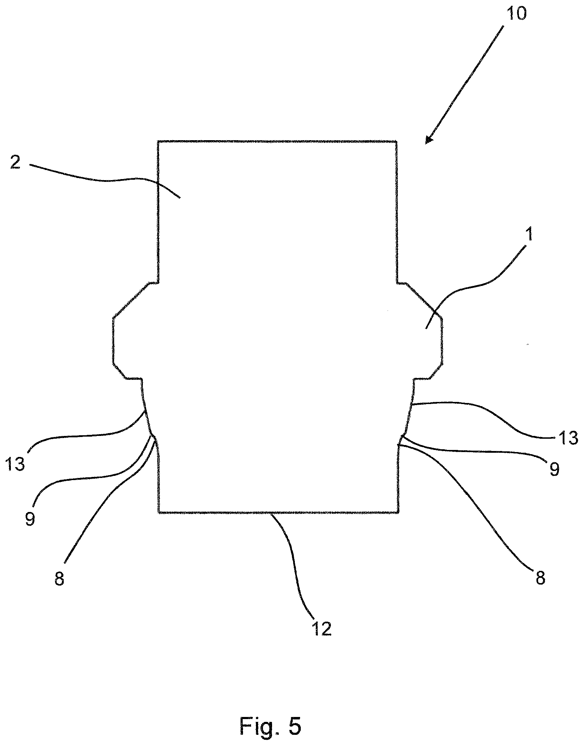

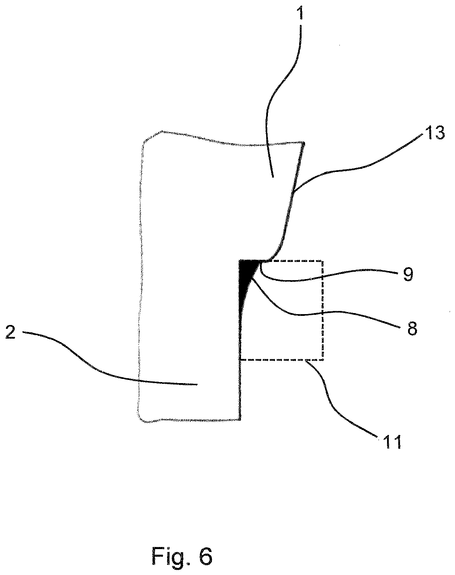

Im Rahmen der Durchführung des Verfahrens 101 gemäß Fig. 1 erfolgt vorzugsweise eine Analyse 104 der durch den Schneidring 1 während der Vormontage auf dem Rohr 2 erzeugten und insbesondere in den Fig. 5 und 6 dargestellten Verformung 8, hier nämlich des durch das Aufbringen des Schneidrings 1 erzeugten Materialaufwurfs des Rohres 2. Im Rahmen der Analyse 104 der Verformung 8 bzw. des Materialaufwurfs wird insbesondere der Grad - das Ausmaß - der Abdeckung einer vorderen Schneidringfläche 9 des Schneidrings 1 durch die Verformung 8 bzw. des Materialaufwurfs bestimmt. Insbesondere wird nämlich der Grad der Abdeckung der vorderen Schneidringfläche 9 an mindestens einer Stelle in der Kontur des Rohres 2 und des Schneidrings 1 bestimmt.

Vorzugsweise beinhalten die ersten Bilddaten ein beispielhaft in Fig. 5 dargestelltes Schattenbild 10 zumindest eines Teils des Rohres 2 und des Schneidrings 1, mit dem die Kontur des Rohres 2 und des Schneidrings 1 zumindest teilweise abgebildet wird. Im Rahmen der Auswertung 103 wird dann vorzugweise zumindest ein Teil der Kontur - an mindestens einer Stelle - des Schneidrings 1 und/oder des Rohres 2 im Schattenbild 10 ausgewertet 103. Dabei wird bevorzugt die Lage des Schneidrings in Bezug auf das Rohr und/oder geometrische Veränderungen des Rohres, insbesondere eine Verformung des Rohres, und/oder geometrische Veränderungen des Schneidrings ermittelt.

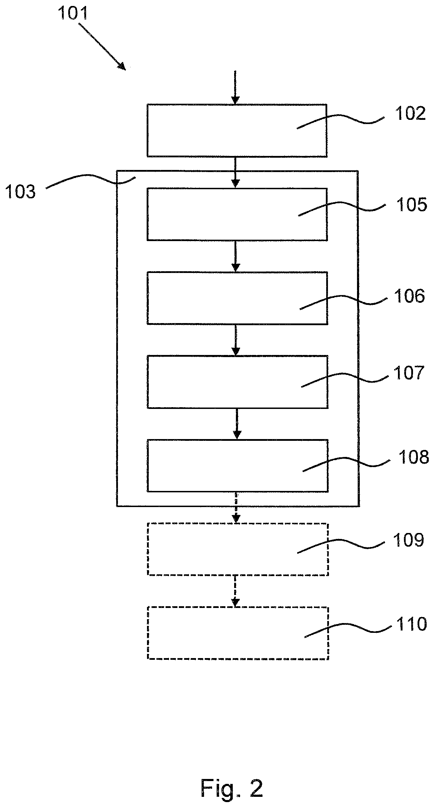

Fig. 2 zeigt ein schematisches Ablaufdiagramm eines weiteren Ausführungsbeispiels eines Verfahrens 101 zur Überprüfung der Vormontage eines Schneidrings 1 auf einem Rohr 2. Nach dem Erfassen 102 der ersten Bilddaten des Rohres 2 und des Schneidrings 1 erfolgt ein Auswerten 103 zumindest eines Teils der ersten Bilddaten. Dabei erfolgt zunächst ein Auffinden 105 einer durch den Schneidring 1 erzeugten Verformung 8 des Rohres 2, insbesondere eines Materialaufwurfes, das Definieren 106 eines in beispielhaft in Fig. 6 dargestellten Auswertebereiches 11, der die Verformung 8 beinhaltet, die Analyse 107 des Auswertebereiches 11, insbesondere in Bezug auf das Vorhandensein von Bildpixeln im Auswertebereich 11 und/oder Flächenanteilen der Verformung 8, sowie das Bestimmen 108 eines Verformungswertes, wobei der Verformungswert bei diesem Ausführungsbeispiel die prozentuale Angabe des Grades der Abdeckung der vorderen Schneidringfläche 9 durch die Verformung 8 in der Kontur ist. Der Verformungswert für Fig. 6 entspricht 80%, was einer Abdeckung der vorderen Schneidringfläche 9 in der Kontur durch die Verformung 8 zu 80% bedeutet.

Gemäß einem weiteren Ausführungsbeispiel des Verfahrens 101 erfolgt gemäß Fig. 2 - gestrichelt dargestellt - zudem ein Vergleichen 109 des Verformungswertes mit einem in einer Datenbank gespeicherten Bereich von Verformungswerten, insbesondere einem Toleranzbereich, so dass anschließend auf Basis des Vergleichs insbesondere ein Ausgeben 110 eines Gütesignals mit einer Ausgabeeinrichtung erfolgt, wobei es sich bei dem Gütesignal vorzugsweise um ein optisches Signal, insbesondere Lichtsignal, handelt, dass dem Montagepersonal signalisiert, ob es sich um eine Vormontage handelt, die den Anforderungen entspricht oder ob es sich um Ausschuss handelt

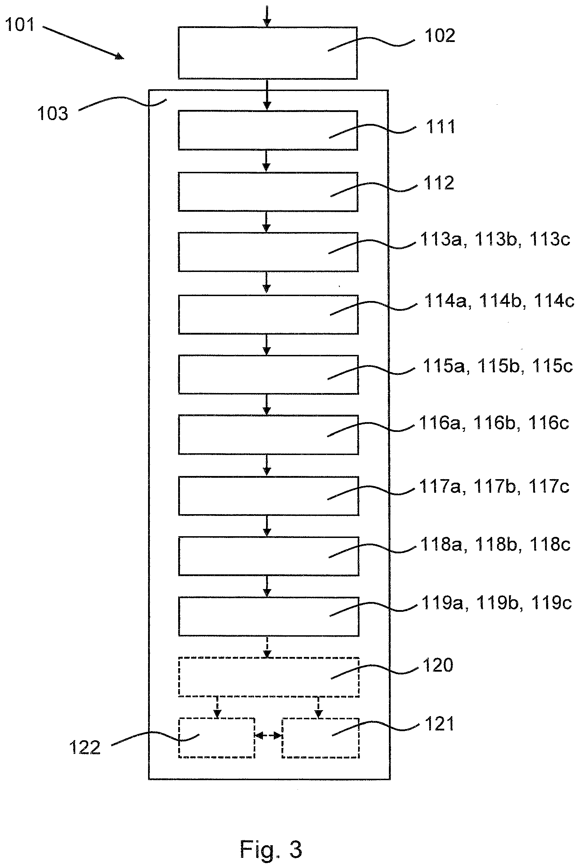

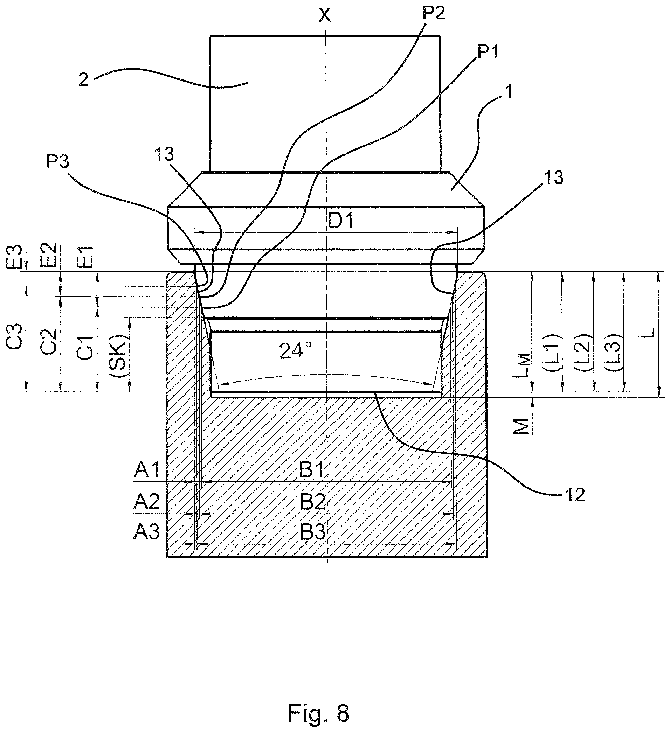

Fig. 3 zeigt einen schematischen Ablauf eines weiteren Ausführungsbeispiels eines erfindungsgemäßen Verfahrens 101, das alternativ oder zusätzlich zu den vorbeschriebenen Verfahren oder Verfahrensschritten durchgeführt wird. Nach dem Erfassen 102 erfolgt das Auswerten 103 der ersten Bilddaten, wobei zunächst ein Ermitteln 111 der Lage einer Stirnkante 12 (siehe Fig. 5 und 8) erfolgt. Anschließend erfolgt das Ermitteln 112 mindestens einer ersten Kante 13 in der Kontur des Schneidrings 1, bei der es hier um die Dichtfläche des Schneidrings 1 handelt. Anschließend erfolgt das Messen 113a eines ersten, lotrechten Abstandes C1 (siehe Fig. 8) zwischen der Stirnkante 12 des Rohres 2 und einem ersten Punkt P1 auf der ersten Kante 13 des Schneidrings 1. Zudem erfolgt ein Messen 113b eines zweiten, lotrechten Abstandes C2 zwischen der Stirnkante 12 des Rohres 2 und einem zweiten Punkt P2 auf der ersten Kante 13 des Schneidrings 1 sowie ein Messen 113c eines dritten, lotrechten Abstandes C3 zwischen der Stirnkante 12 des Rohres 2 und einem dritten Punkt P3 auf der ersten Kante 13 des Schneidrings 1. Alle drei Punkte P1, P2 und P3 liegen folglich auf der Dichtfläche des Schneidrings 1.

Zudem erfolgt in den ersten Bilddaten ein Ermitteln 114a eines Durchmessers B1 des Schneidrings 1 am Punkt P1, ein Ermitteln 114b eines Durchmessers B2 des Schneidrings 1 am Punkt P2 sowie ein Ermitteln 114c des Durchmessers B3 des Schneidrings 1 am Punkt P3. Nachfolgend ein Ermitteln 115a eines Neigungswinkels $\alpha$ der ersten Kante 13 im Punkt P1 zur Rohrlängsachse X sowie ein Ermitteln 115b eines Neigungswinkels $\beta$ der ersten Kante 13 im Punkt P2 zur Rohrlängsachse X sowie ein Ermitteln 115c des Neigungswinkels $\gamma$ der ersten Kante 13 im Punkt P3 zur Rohrlängsachse X.

Nach dem Ermitteln 115a, 115b, 115c erfolgt ein Berechnen 116a eines radialen Abstandes A1 zwischen dem Punkt P1 und dem maximalen Kegeldurchmesser D1 eines Verschraubungsstutzens für den Schneidring 1. D1 ist eine schneidring- bzw. rohrspezifische Konstante und ergibt sich insbesondere aus der Tabelle 1. Ferner erfolgt ein Berechnen 116b eines radialen Abstandes A2 zwischen dem Punkt P2 und dem maximalen Kegeldurchmesser D1 des Verschraubungsstutzens für den Schneidring 1 sowie ein Berechnen 116c eines radialen Abstandes A3 zwischen dem Punkt P3 und dem maximalen Kegeldurchmesser D1 des Verschraubungsstutzens für den Schneidring 1. Das Berechnen 116a, 116b, 116c erfolgt auf Basis der Formel

$$\frac{D1 - Bx}{2} = Ax$$

Dabei ist Bx ein Platzhalter für B1, B2 und B3 sowie Ax ein Platzhalter für A1, A2 und A3.

Auf Basis der wie vorstehend berechneten Daten erfolgt dann ein Berechnen 117a eines Abstandes E1 unter Berücksichtigung des Neigungswinkels $\alpha$ der ersten Kante 13 zur Rohrlängsachse X und dem radialen Abstand A1 unter Heranziehung der Tangens-Funktion, sowie ein Berechnen 117b eines Abstandes E2 unter Berücksichtigung des Neigungswinkels $\beta$ der ersten Kante 13 zur Rohrlängsachse X und dem radialen Abstand A2 sowie ein Berechnen 117c eines Abstandes E3 unter Berücksichtigung des Neigungswinkels $\gamma$ der ersten Kante 13 zur Rohrlängsachse X und dem radialen Abstand A3. Das Berechnen 117a, 117b, 117c erfolgt auf Basis der Formel

$$Ex = \frac{Ax}{\tan \alpha}$$

Dabei ist Ex ein Platzhalter für E1, E2 und E3, Ax ein Platzhalter für A1, A2 und A3 sowie $\alpha$ ein Platzhalter für $\alpha$, $\beta$ und $\gamma$.

Zudem erfolgt ein Berechnen 118a einer Eindringtiefe L1 aus der Summe der Abstände C1 und E1 sowie ein Berechnen 118b einer Eindringtiefe L2 aus der Summe der Abstände C2 und E2 sowie ein Berechnen 118c einer Eindringtiefe L3 aus der Summe der Abstände C3 und E3. Das Berechnen 118a, 118b, 118c erfolgt auf Basis der Formel

$$Lx = Cx + Ex$$

Dabei ist Lx ein Platzhalter für L1, L2 und L3, Cx ein Platzhalter für C1, C2 und C3 sowie Ex ein Platzhalter für E1, E2 und E3.

In Abhängigkeit von dem Ausführungsbeispiel des Verfahrens 101 erfolgt anschließend ein Vergleichen 119a der Eindringtiefe L1 mit einem Referenzwert oder einem Toleranzbereich, ein Vergleichen 119b der Eindringtiefe L2 mit einem Referenzwert oder einem Toleranzbereich sowie ein Vergleichen 119c der Eindringtiefe L3 mit einem Referenzwert oder einem Toleranzbereich.

Alternativ dazu erfolgt ein Berechnen 120 einer ermittelten Eindringtiefe $L_M$ aus den Eindringtiefen L1, L2 und L3, insbesondere auf Basis der Formel

$$L_M = \frac{L1 + L2 + L3}{3}$$

Vorzugsweise erfolgt anschließend ein Vergleichen 121 der ermittelten Eindringtiefe $L_M$ mit einem Referenzwert oder einem Toleranzbereich, insbesondere dem zugehörigen Toleranzbereich ($L_{Min}$ - $L_{Max}$) aus der Tabelle 1.

Zudem kann in Abhängigkeit des Ausführungsbeispiels ein Berechnen 122 einer Spalthöhe M erfolgen, die aus der Differenz einer schneidringspezifischen, idealen Eindringtiefe L und der gemittelten Eindringtiefe $L_M$ berechnet wird, insbesondere mit der Formel

$$M = L - L_M$$

Dabei ist M die Spalthöhe, L eine schneidringspezifische Konstante für die Eindringtiefe und $L_M$ die an konkreten Prüfling ermittelte, gemittelte Eindringtiefe. Je kleiner die Spalthöhe M, desto besser ist die Position des Schneidrings 1 am Rohr 2.

Fig. 4 zeigt die schematische Anordnung eines Ausführungsbeispiels der Vorrichtung 3 zur Überprüfung der Vormontage eines Schneidrings 1 auf einem Rohr 2, aufweisend mindestens eine Erfassungseinrichtung 4 mit einem telezentrischen Objektiv 7 sowie eine Beleuchtungseinrichtung 6, die so auf die Erfassungseinrichtung 4 ausgerichtet ist, dass zwischen der Beleuchtungseinrichtung 6 und der Erfassungseinrichtung 4 ein Erfassungsbereich 5 ausgebildet ist. Mit der Vorrichtung 3 sind folglich Bilddaten eines im Erfassungsbereich 5 anordenbaren Rohrs 2 mit vormontiertem Schneidring 1 erfassbar, wobei die Vorrichtung 3 zum Auswerten zumindest eines Teils der ersten Bilddaten in Bezug auf eine Lage des Schneidrings 1 zum Rohr 2 und/oder geometrischer Veränderungen des Rohres 2 und/oder geometrischer Veränderungen des Schneidrings 1 eingerichtet und ausgebildet ist.

Fig. 5 zeigt beispielhaft ein Schattenbild 10, das als Teil der ersten Bilddaten erfasst worden ist. Dem Schattenbild 10 sind die Konturen des Schneidrings 1 und zumindest teilweise des Rohres 2 zu entnehmen. An der sich an die Dichtfläche, hier als erste Kante 13, anschließende vordere Schneidringfläche 9 hat sich die Verformung 8, hier Materialaufwurf, ausgebildet, der für die Beurteilung der Vormontage zumindest an einer Stelle in der Kontur - wie beschrieben - ausgewertet wird.

Fig. 6 zeigt einen Ausschnitt der Fig. 5, in dem die Verformung 8 farblich - schwarz - hervorgehoben ist. Der beispielhaft dargestellte Auswertebereich 11 beinhaltet ausschließlich die Verformung 8. Der Auswertebereich 11 wurde hier anhand der vorderen Schneidringkante 9 und der Außenkante des Rohres 2 definiert. Der Auswertebereich 11 wird anhand der Anzahl der Bildpixel der Verformung 8 und/oder anhand der Flächenanteile der Verformung 8 ausgewertet.

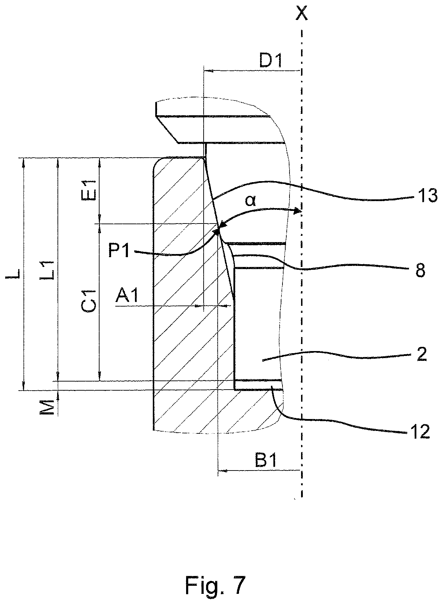

Fig. 7 zeigt ein Ausführungsbeispiel eines Rohres 2 mit vormontiertem Schneidring 1, eingebracht in einen Vormontagestutzen. Beispielhaft und zur besseren Übersicht sind nur die Maße und berechneten Größen für einen einzigen Punkt auf der Kante 13, hier der Dichtfläche des Schneidrings 1, eingetragen. Die Maße D1 und B1 sind nur bis zur Rohrlängsachse X dargestellt.

Fig. 8 zeigt ein Ausführungsbeispiel eines Rohres 2 mit vormontiertem Schneidring 1, eingebracht in einen Vormontagestutzen. Dargestellt sind alle zuvor beschriebenen, berechneten und gemessenen Werte für alle drei Punkte P1, P2 und P3. Der Wert $L_M$ entspricht der gemittelten Eindringtiefe. Der Konus der Dichtfläche des Schneidrings 1, der in der dargestellten Kontur die Kanten 13 bildet, hat üblicherweise einen Winkel von 24° zwischen den Kanten 13 in der Kontur.

Die Erfindung ist in den Ansprüchen 1 bis 20 definiert. In den abhängigen Ansprüchen sind vorteilhafte Ausgestaltungen und Weiterbildungen des erfindungsgemäßen Verfahrens nach Anspruch 1 und der erfindungsgemäßen Vorrichtung nach Anspruch 15 angegeben.

**Bezugszeichenliste**

| | |
|---|---|
| 1 | Schneidring |
| 2 | Rohr |
| 3 | Vorrichtung |
| 4 | Erfassungseinrichtung |
| 5 | Erfassungsbereich |
| 6 | Beleuchtungseinrichtung |
| 7 | Objektiv |
| 8 | Verformung |
| 9 | Vordere Schneidringfläche |
| 10 | Schattenbild |
| 11 | Auswertebereich |
| 12 | Stirnkante von 2 |
| 13 | Erste Kante von 1 |
| | |
| X | Rohrlängsachse |
| $\alpha$ | Neigungswinkel von 13 in P1 |
| $\beta$ | Neigungswinkel von 13 in P2 |
| $\gamma$ | Neigungswinkel von 13 in P3 |
| A1 | Abstand P1 - D1 |
| A2 | Abstand P2 - D1 |
| A3 | Abstand P3 - D1 |
| B1 | Durchmesser von 1 an P1 |
| B2 | Durchmesser von 1 an P2 |
| B3 | Durchmesser von 1 an P3 |
| C1 | Abstand 12 - P1 |
| C2 | Abstand 12 - P2 |
| C3 | Abstand 12 - P3 |
| D1 | Maximaler Kegeldurchmesser Verschraubungsstutzen |
| E1 | Abstand $\alpha$ - A1 |
| E2 | Abstand $\beta$ - A2 |
| E3 | Abstand $\gamma$ - A3 |
| L | Eindringtiefe |
| L1 | Eindringtiefe C1 + E1 |
| L2 | Eindringtiefe C2 + E2 |
| L3 | Eindringtiefe C3 + E3 |
| $L_M$ | Ermittelte Eindringtiefe |
| M | Spalthöhe |
| P1 | Erster Punkt auf 13 |
| P2 | Zweiter Punkt auf 13 |
| P3 | Dritter Punkt auf 13 |
| | |
| 101 | Verfahren |
| 102 | Erfassen |
| 103 | Auswerten |

| 104 | Analyse von 8 |
|-----|---------------|
| 105 | Auffinden |
| 106 | Definieren |
| 107 | Analyse von 11 |
| 108 | Bestimmen |
| 109 | Vergleichen |
| 110 | Ausgeben |
| 111 | Ermitteln von 12 |
| 112 | Ermitteln von 13 |
| 113a | Messen von C1 |
| 113b | Messen von C2 |
| 113c | Messen von C3 |
| 114a | Ermitteln von B1 |
| 114b | Ermitteln von B2 |
| 114c | Ermitteln von B3 |
| 115a | Ermitteln von $\alpha$ |
| 115b | Ermitteln von $\beta$ |
| 115c | Ermitteln von $\gamma$ |
| 116a | Berechnen von A1 |
| 116b | Berechnen von A2 |
| 116c | Berechnen von A3 |
| 117a | Berechnen von E1 |
| 117b | Berechnen von E2 |
| 117c | Berechnen von E3 |
| 118a | Berechnen von L1 |
| 118b | Berechnen von L2 |
| 118c | Berechnen von L3 |
| 119a | Vergleichen L1 mit Referenzwert |
| 119b | Vergleichen L2 mit Referenzwert |
| 119c | Vergleichen L3 mit Referenzwert |
| 120 | Berechnen von $L_M$ |
| 121 | Vergleichen $L_M$ mit Referenzwert |
| 122 | Berechnen von M |

**Patentansprüche**

1. Verfahren (101) zur Überprüfung der Vormontage eines Schneidrings (1) auf einem Rohr (2) mit einer Vorrichtung (3) mit mindestens einer optischen Erfassungseinrichtung (4) zum Erfassen (102) von Bilddaten in einem Erfassungsbereich (5), aufweisend mindestens die nachfolgenden Verfahrensschritte:

   - Erfassen (102) von mindestens ersten Bilddaten mindestens eines zumindest teilweise in den Erfassungsbereich (5) eingebrachten Rohres (2) mit vormontiertem Schneidring (1),
   - Auswerten (103) zumindest eines Teils der ersten Bilddaten in Bezug auf eine Lage des Schneidrings (1) zum Rohr (2) und/oder geometrische Veränderungen des Rohres (2) und/oder geometrische Veränderungen des Schneidrings (1).

2. Verfahren (101) nach Anspruch 1,
   **dadurch gekennzeichnet, dass** die Vorrichtung (3) eine Beleuchtungseinrichtung (6) aufweist, insbesondere eine telezentrische Beleuchtungseinrichtung (6), und dass zumindest während des Erfassens (102) der ersten Bilddaten eine zumindest teilweise Beleuchtung des Rohres (2) und/oder des Schneidrings (1) mit der Beleuchtungseinrichtung (6) erfolgt.

3. Verfahren (101) nach Anspruch 1 oder 2,
   **dadurch gekennzeichnet, dass** die Erfassungseinrichtung (4) ein telezentrisches Objektiv (7) aufweist.

4. Verfahren (101) nach einem der Ansprüche 1 bis 3,
   **dadurch gekennzeichnet, dass** als geometrische Veränderung des Rohres (2) mindestens eine durch das Vormontieren des Schneidrings (1) entstandene Verformung (8) des Rohres (2) zumindest teilweise analysiert wird, insbesondere ein durch den Schneidring (1) erzeugter Materialaufwurf des Rohres (2) zumindest teilweise analysiert (104) wird.

5. Verfahren (101) nach Anspruch 4,
**dadurch gekennzeichnet, dass** im Rahmen der Analyse (104) der Verformung (8), insbesondere des Materialaufwurfs, der Grad der Abdeckung einer vorderen Schneidringfläche (9) durch die Verformung (8), insbesondere den Materialaufwurf, bestimmt wird.

6. Verfahren (101) nach einem der Ansprüche 1 bis 5,
**dadurch gekennzeichnet, dass** die ersten Bilddaten ein Schattenbild (10) zumindest eines Teils des Rohres (2) und zumindest eines Teils des Schneidrings (1) beinhalten, und dass zur Auswertung (103) zumindest ein Teil der Kontur des Schneidrings (1) und/oder des Rohres (2) im Schattenbild (10) ausgewertet wird.

7. Verfahren (101) nach einem der Ansprüche 1 bis 6,
**dadurch gekennzeichnet, dass** das Auswerten (103) der ersten Bilddaten folgende Verfahrensschritte aufweist:

- Auffinden (105) einer durch den Schneidring (1) erzeugten Verformung (8) des Rohres (2), insbesondere eines Materialaufwurfes,
- Definieren (106) eines Auswertebereiches (11), der die Verformung (8), insbesondere den Materialaufwurf, beinhaltet,
- Analyse (107) des Auswertebereichs (11), insbesondere in Bezug auf das Vorhandensein von Bildpixeln,
- Bestimmen (108) eines Verformungswertes, insbesondere Materialaufwurfwertes.

8. Verfahren (101) nach Anspruch 7,
**dadurch gekennzeichnet, dass** ferner folgende Verfahrensschritte umfasst sind:

- Vergleichen (109) des Verformungswertes, insbesondere des Materialaufwurfwertes, mit mindestens einem in einer Datenbank gespeicherten Verformungswert, insbesondere Materialaufwurfwertes, und/oder einem gespeicherten Bereich von Verformungswerten, insbesondere Materialaufwurfwerten,
- Ausgeben (110) eines Gütesignals mit einer Ausgabeeinrichtung.

9. Verfahren (101) nach einem der Ansprüche 1 bis 8,
**dadurch gekennzeichnet, dass** das Auswerten (103) zumindest der ersten Bilddaten folgende Verfahrensschritte aufweist:

- Ermitteln (111) der Lage einer Stirnkante (12) des Rohres (2),
- Ermitteln (112) mindestens einer ersten Kante (13), insbesondere in der Kontur, des Schneidrings (1),
- Messen (113a) eines ersten, insbesondere lotrechten, Abstandes (C1) zwischen der Stirnkante (12) des Rohres (2) und mindestens einem ersten Punkt (P1) auf der ersten Kante (13) des Schneidrings (1).

10. Verfahren (101) nach Anspruch 9,
**dadurch gekennzeichnet, dass** das Auswerten (103) ferner folgende Verfahrensschritte aufweist,

- Messen (113b) eines zweiten, insbesondere lotrechten, Abstandes (C2) zwischen der Stirnkante (12) des Rohres (2) und mindestens einem zweiten Punkt (P2) auf der ersten Kante (13) des Schneidrings (1), insbesondere,
- Messen (113c) eines dritten, insbesondere lotrechten, Abstandes (C3) zwischen der Stirnkante (12) des Rohres (2) und mindestens einem dritten Punkt (P3) auf der ersten Kante (13) des Schneidrings (1).

11. Verfahren (101) nach Anspruch 9 oder 10,
**dadurch gekennzeichnet, dass** insbesondere die erste Kante (13) des Schneidrings (1) einen Teil der Dichtfläche des Schneidrings (1) beinhaltet, und dass das Auswerten (103) ferner folgende Verfahrensschritte aufweist:

- Ermitteln (114a) eines Durchmessers (B1) des Schneidrings (1) am Punkt (P1),
- Ermitteln (115a) des Neigungswinkels ($\alpha$) der ersten Kante (13) im Punkt (P1) zur Rohrlängsachse (X),
- Berechnen (116a) eines radialen Abstandes (A1) zwischen dem Punkt (P1) und dem maximalen Kegeldurchmesser (D1) eines Verschraubungsstutzens für den Schneidring (1),

- Berechnen (117a) eines Abstandes (E1) unter Berücksichtigung des Neigungswinkels ($\alpha$) der ersten Kante (13) zur Rohrlängsachse (X) und dem radialen Abstand (A1), insbesondere mit der Tangensfunktion,
- Berechnen (118a) eines Längenmaßes (L1) aus der Summe der Abstände (C1) und (E1),
- Vergleichen (119a) des Längenmaßes (L1) mit einem Referenzwert.

**12.** Verfahren (101) nach Anspruch 11,
**dadurch gekennzeichnet, dass** das Auswerten (103) ferner folgende Verfahrensschritte aufweist:

- Ermitteln (114b, 114c) von Durchmessern (B2) und (B3) des Schneidrings (1) an den Punkten (P1) und (P2),
- Ermitteln (115b, 115c) der Neigungswinkels ($\beta$) und ($\gamma$) der ersten Kante (13) in den Punkten (P2) und (P3) zur Rohrlängsachse (X),
- Berechnen (116b, 116c) radialer Abstände (A2) und (A3) zwischen den Punkten (P2) und (P3) und dem maximalen Kegeldurchmesser (D1) eines Verschraubungsstutzens für den Schneidring (1),
- Berechnen (117b, 117c) von Abständen (E2) und (E3) unter Berücksichtigung der Neigungswinkel ($\beta$) und ($\gamma$) der ersten Kante (13) zur Rohrlängsachse (X) und der radialen Abstände (A2) und (A3), insbesondere mit der Tangensfunktion,
- Berechnen (118b. 118c) von Längenmaßen (L2) und (L3) aus der Summe der Abstände (C2) und (E2) sowie der Abstände (C3) und (E3),
- Berechnen (120) einer gemittelten Eindringtiefe ($L_M$) aus den Längenmaßen (L1, L2 und L3).

**13.** Verfahren (101) nach Anspruch 12,
**dadurch gekennzeichnet, dass** die gemittelte Eindringtiefe ($L_M$) mit mindestens einem Referenzwert verglichen (121) wird.

**14.** Verfahren (101) nach Anspruch 12 oder 13,
**dadurch gekennzeichnet, dass** mit der gemittelten Eindringtiefe ($L_M$) und einer schneidringspezifischen idealen Eindringtiefe (L) eine Spalthöhe (M) berechnet (122) wird.

**15.** Vorrichtung (3) zur Überprüfung der Vormontage eines Schneidrings (1) auf einem Rohr (2), aufweisend mindestens eine Erfassungseinrichtung (4) und mindestens eine Beleuchtungseinrichtung (6), wobei die Beleuchtungseinrichtung (6) auf die Erfassungseinrichtung (4) ausgerichtet ist, so dass zwischen der Beleuchtungseinrichtung (6) und der Erfassungseinrichtung (4) ein Erfassungsbereich (5) ausgebildet ist, dass mit der Vorrichtung (3) Bilddaten eines im Erfassungsbereich (5) anordenbaren Rohres (2) mit vormontiertem Schneidring (1) erfassbar sind,
**dadurch gekennzeichnet, dass** die Vorrichtung (3) eine Datenverarbeitungseinrichtung umfasst, die zum Auswerten zumindest eines Teils der ersten Bilddaten in Bezug auf eine Lage des Schneidrings (1) zum Rohr (2) und/oder geometrische Veränderungen des Rohres (2) und/oder geometrische Veränderungen des Schneidrings (1) eingerichtet und ausgebildet ist.

**16.** Vorrichtung (3) nach Anspruch 15,
**dadurch gekennzeichnet, dass** die Vorrichtung (3) zur Durchführung eines Verfahrens (101) der Ansprüche 1 bis 14 ausgebildet und eingerichtet ist.

**17.** Vorrichtung (3) nach Anspruch 15 oder 16,
**dadurch gekennzeichnet, dass** die Erfassungseinrichtung (4) als Kamera mit einer Auflösung von 5 Megapixel, insbesondere mit einer Pixelgenauigkeit zwischen 3 $\mu$m und 6 $\mu$m, ausgebildet ist.

**18.** Vorrichtung (3) nach einem der Ansprüche 15 bis 17,
**dadurch gekennzeichnet, dass** die Erfassungseinrichtung (4) ein telezentrisches Objektiv (7) aufweist und/oder die Beleuchtungseinrichtung (6) als telezentrische Beleuchtungseinrichtung (6) ausgebildet ist.

**19.** Vormontagevorrichtung zur Vormontage eines Schneidrings (1) an einem Rohr (2), mit einem Vormontagestutzen zur Aufnahme des Rohres (2) und des Schneidrings (1),
**dadurch gekennzeichnet, dass** die Vormontagevorrichtung eine Vorrichtung (3) nach einem der Ansprüche 15 bis 18 aufweist, insbesondere mit einer Vorrichtung (3) nach einem der Ansprüche 15 bis 18 mechanisch und/oder elektrisch verbunden ist.

**20.** Computerprogrammprodukt zur Ausführung eines Verfahrens nach einem der Ansprüche 1 oder 4 bis 14.

**Claims**

1. Method (101) for checking the pre-assembly of a cutting ring (1) on a pipe (2) by way of a device (3) having at least one optical detection installation (4) for detecting (102) image data in a detection region (5), comprising at least the following method steps:

   - detecting (102) at least first image data of at least one pipe (2), having a pre-assembled cutting ring (1), that is at least in part incorporated in the detection region (5);
   - evaluating (103) at least part of the first image data in terms of a position of the cutting ring (1) relative to the pipe (2), and/or geometric modifications of the pipe (2) and/or geometric modifications of the cutting ring (1).

2. Method (101) according to Claim 1,
   **characterized in that** the device (3) has an illumination installation (6), in particular a telecentric illumination installation (6), and **in that** an at least partial illumination of the pipe (2) and/or of the cutting ring (1) is performed by way of the illumination installation (6) at least while detecting (102) the first image data.

3. Method (101) according to Claim 1 or 2, **characterized in that** the detection installation (4) has a telecentric lens (7).

4. Method (101) according to one of Claims 1 to 3, **characterized in that** as a geometric modification of the pipe (2) at least a deformation (8) of the pipe (2) created by pre-assembling the cutting ring (1) is at least partially analyzed, in particular a material bulge of the pipe (2) generated by the cutting ring (1) is at least partially analyzed (104) .

5. Method (101) according to Claim 4,
   **characterized in that** in the context of analyzing (104) the deformation (8), in particular the material bulge, the degree of coverage of a front cutting ring face (9) by the deformation (8), in particular the material bulge, is determined.

6. Method (101) according to one of Claims 1 to 5, **characterized in that** the first image data include a shadow image (10) of at least part of the pipe (2) and at least part of the cutting ring (1), and **in that** for evaluating (103) at least part of the contour of the cutting ring (1) and/or the tube (2) in the shadow image (10) is evaluated.

7. Method (101) according to one of Claims 1 to 6, **characterized in that** the evaluating (103) of the first image data comprises the following method steps:

   - locating (105) a deformation (8) of the pipe (2), in particular a material bulge, generated by the cutting ring (1);
   - defining (106) an evaluation region (11) which includes the deformation (8), in particular the material bulge;
   - analyzing (107) the evaluation region (11), in particular in terms of the presence of image pixels;
   - determining (108) a deformation value, in particular a material bulge value.

8. Method (101) according to Claim 7,
   **characterized in that** the following method steps are furthermore comprised:

   - comparing (109) the deformation value, in particular the material bulge value, with at least one deformation value, in particular material bulge value, stored in a database, and/or a stored range of deformation values, in particular material bulge values;
   - outputting (110) a quality signal by way of an output device.

9. Method (101) according to one of Claims 1 to 8, **characterized in that** the evaluating (103) at least of the first image data comprises the following method steps:

   - determining (111) the position of an end edge (12) of the pipe (2);
   - determining (112) at least one first edge (13), in particular in the contour, of the cutting ring (1) ;
   - measuring (113a) a first, in particular perpendicular, spacing (C1) between the end edge (12) of the pipe (2) and at least one first point (P1) on the first edge (13) of the cutting ring (1) .

10. Method (101) according to Claim 9,
    **characterized in that** the evaluating (103) furthermore comprises the following method steps:

    - measuring (113b) a second, in particular perpendicular, spacing (C2) between the end edge (12) of the pipe (2) and at least one second point (P2) on the first edge (13) of the cutting ring (1), in particular
- measuring (113c) a third, in particular perpendicular, spacing (C3) between the end edge (12) of the pipe (2) and at least one third point (P3) on the first edge (13) of the cutting ring (1) .

11. Method (101) according to Claim 9 or 10, **characterized in that** in particular the first edge (13) of the cutting ring (1) includes part of the sealing face of the cutting ring (1), and **in that** the evaluating (103) furthermore comprises the following method steps:

- determining (114a) a diameter (B1) of the cutting ring (1) at the point (P1);
- determining (115a) the inclination angle ($\alpha$) of the first edge (13) in relation to the pipe longitudinal axis (X) in the point (P1);
- calculating (116a) a radial spacing (A1) between the point (P1) and the maximum cone diameter (D1) of a screw-fitting connector for the cutting ring (1) ;
- calculating (117a) a spacing (E1) while considering the inclination angle ($\alpha$) of the first edge (13) in relation to the pipe longitudinal axis (X) and to the radial spacing (A1), in particular by way of the tangent function;
- calculating (118a) a length dimension (L1) from the sum of the spacings (C1) and (E1);
- comparing (119a) the length dimension (L1) with a reference value.

12. Method (101) according to Claim 11,
**characterized in that** the evaluating (103) furthermore comprises the following method steps:

- determining (114b, 114c) diameters (B2) and (B3) of the cutting ring (1) at the points (P1) and (P2) ;
- determining (115b, 115c) the inclination angles ($\beta$) and ($\gamma$) of the first edge (13) in relation to the pipe longitudinal axis (X) in the points (P2) and (P3);
- calculating (116b, 116c) radial spacings (A2) and (A3) between the points (P2) and (P3) and the maximum cone diameter (D1) of a screw-fitting connector for the cutting ring (1);
- calculating (117b, 117c) spacings (E2) and (E3) while considering the inclination angles ($\beta$) and ($\gamma$) of the first edge (13) in relation to the pipe longitudinal axis (X) and to the radial spacings (A2) and (A3), in particular by way of the tangent function;
- calculating (118b, 118c) length dimensions (L2) and (L3) from the sum of the spacings (C2) and (E2) as well as the spacings (C3) and (E3);
- calculating (120) a mean penetration depth ($L_M$) from the length dimensions (L1, L2, and L3).

13. Method (101) according to Claim 12,
**characterized in that** the mean penetration depth ($L_M$) is compared (121) with at least one reference value.

14. Method (101) according to Claim 12 or 13, **characterized in that** a gap height (M) is calculated (122) by way of the mean penetration depth ($L_M$) and a cutting-ring-specific ideal penetration depth (L) .

15. Device (3) for checking the pre-assembly of a cutting ring (1) on a pipe (2), having at least one detection installation (4) and at least one illumination installation (6), wherein the illumination installation (6) is aligned with the detection installation (4) such that a detection region (5) is configured between the illumination installation (6) and the detection installation (4), that image data of a pipe (2), having the pre-assembled cutting ring (1), that is capable of being disposed in the detection region (5) is detectable by way of the device (3),
**characterized in that** the device (3) comprises a data processing installation which is specified and configured for evaluating at least part of the first image data in terms of a position of the cutting ring (1) relative to the pipe (2), and/or geometric modifications of the pipe (2) and/or geometric modifications of the cutting ring (1).

16. Device (3) according to Claim 15,
**characterized in that** the device (3) is configured and specified for carrying out a method (101) of Claims 1 to 14.

17. Device (3) according to Claim 15 or 16, **characterized in that** the detection installation (4) is configured as a camera having a resolution of 5 megapixels, in particular having a pixel accuracy between 3 $\mu$m and 6 $\mu$m.

18. Device (3) according to one of Claims 15 to 17, **characterized in that** the detection installation (4) has a telecentric lens (7) and/or the illumination installation (6) is configured as a telecentric illumination installation (6).

19. Pre-assembly device for pre-assembling a cutting ring (1) on a pipe (2), having a pre-assembly connector for receiving the pipe (2) and the cutting ring (1),
**characterized in that** the pre-assembly device has a device (3) according to one of Claims 15 to 18, in particular is mechanically and/or electrically connected to a device (3) according to one of Claims 15 to 18.

20. Computer software product for carrying out a method according to one of Claims 1 or 4 to 14.


**Revendications**

1. Procédé (101) de vérification du pré-montage d'une bague de coupe (1) sur un tube (2) avec un dispositif (3) comportant au moins un moyen de détection optique (4) destiné à détecter (102) des données d'image dans une zone de détection (5), le procédé comprenant au moins les étapes suivantes :

    - détecter (102) au moins des premières données d'image d'au moins un tube (2), introduit au moins partiellement dans la zone de détection (5), avec une bague de coupe pré-montée (1),
    - évaluer (103) au moins une partie des premières données d'image quant à une position de la bague de coupe (1) par rapport au tube (2) et/ou modifications géométriques du tube (2) et/ou modifications géométriques de la bague de coupe (1).

2. Procédé (101) selon la revendication 1, **caractérisé en ce que** le dispositif (3) comprend un moyen d'éclairage (6), en particulier un moyen d'éclairage télécentrique (6), et **en ce que**, au moins pendant la détection (102) des premières données d'image, un éclairage au moins partiel du tube (2) et/ou de la bague de coupe (1) est effectué avec le moyen d'éclairage (6).

3. Procédé (101) selon la revendication 1 ou 2, **caractérisé en ce que** le dispositif de détection (4) comporte un objectif télécentrique (7).

4. Procédé (101) selon l'une des revendications 1 à 3, **caractérisé en ce qu'**au moins une déformation (8) du tube (2) générée par le pré-montage de la bague de coupe (1), en particulier une projection de matière du tube (2) générée par la bague de coupe (1), est analysée au moins partiellement (104) comme modification géométrique du tube (2).

5. Procédé (101) selon la revendication 4, **caractérisé en ce que**, dans le cadre de l'analyse (104) de la déformation (8), en particulier de la projection de matière, le degré de recouvrement d'une surface avant (9) de la bague de coupe est déterminé par la déformation (8), en particulier la projection de matière.

6. Procédé (101) selon l'une des revendication 1 à 5, **caractérisé en ce que** les premières données d'image contiennent une image d'ombre (10) d'au moins une partie du tube (2) et d'au moins une partie de la bague de coupe (1), et **en ce que**, pour effectuer l'évaluation (103), au moins une partie du contour de la bague de coupe (1) et/ou du tube (2) dans l'image d'ombre (10) est évaluée.

7. Procédé (101) selon l'une des revendications 1 à 6,
   **caractérisé en ce que** l'évaluation (103) des premières données d'image comprend les étapes de procédé suivantes :

    - trouver (105) une déformation (8) du tube (2), en particulier une projection de matière, générée par la bague de coupe (1),
    - définir (106) une zone d'évaluation (11) contenant la déformation (8), en particulier la projection de matière,
    - analyser (107) la zone d'évaluation (11), notamment en ce qui concerne la présence de pixels d'image,
    - déterminer (108) une valeur de déformation, en particulier une valeur de projection de matière.

8. Procédé (101) selon la revendication 7, **caractérisé en ce qu'**il comprend en outre les étapes suivantes :

    - comparer (109) la valeur de déformation, en particulier la valeur de projection de matière, à au moins une valeur de déformation mémorisée dans une base de données, en particulier une valeur de projection de matière, et/ou une gamme mémorisée de valeurs de déformation, en particulier de valeurs de projection de matière,
    - délivrer (110) un signal de qualité à l'aide d'un moyen de sortie.

**9.** Procédé (101) selon l'une des revendications 1 à 8,
**caractérisé en ce que** l'évaluation (103) d'au moins les premières données d'image comprend les étapes de procédé suivantes :

- déterminer (111) la position d'un bord frontal (12) du tube (2),
- déterminer (112) au moins un premier bord (13), notamment dans le contour, de la bague de coupe (1),
- mesurer (113a) une première distance (C1), notamment perpendiculaire, entre le bord frontal (12) du tube (2) et au moins un premier point (P1) sur le premier bord (13) de la bague de coupe (1).

**10.** Procédé (101) selon la revendication 9, **caractérisé en ce que** l'évaluation (103) comprend en outre les étapes de procédé suivantes,

- mesurer (113b) une deuxième distance (C2), notamment perpendiculaire, entre le bord frontal (12) du tube (2) et au moins un deuxième point (P2) sur le premier bord (13) de la bague de coupe (1), notamment,
- mesurer (113c) une troisième distance (C3), notamment perpendiculaire, entre le bord frontal (12) du tube (2) et au moins un troisième point (P3) sur le premier bord (13) de la bague de coupe (1).

**11.** Procédé (101) selon la revendication 9 ou 10, **caractérisé en ce que** en particulier le premier bord (13) de la bague de coupe (1) contient une partie de la surface d'étanchéité de la bague de coupe (1), et **en ce que** l'évaluation (103) comprend en outre les étapes de procédé suivantes :

- déterminer (114a) un diamètre (B1) de la bague de coupe (1) au point (P1),
- déterminer (115a) l'angle d'inclinaison ($\alpha$) du premier bord (13) au point (P1) par rapport à l'axe longitudinal du tube (X),
- calculer (116a) une distance radiale (A1) entre le point (P1) et le diamètre de cône maximal (D) d'un raccord de vissage de la bague de coupe (1),
- calculer (117a) une distance (E1) avec prise en compte de l'angle d'inclinaison ($\alpha$) du premier bord (13) par rapport à l'axe longitudinal du tube (X) et de la distance radiale (A1), en particulier avec la fonction tangente,
- calculer (118a) une mesure de longueur (L1) à partir de la somme des distances (C1) et (E1),
- comparer (119a) la mesure de longueur (L1) à une valeur de référence.

**12.** Procédé (101) selon la revendication 11, **caractérisé en ce que** l'évaluation (103) comprend en outre les étapes de procédé suivantes :

- déterminer (114b, 114c) les diamètres (B2) et (B3) de la bague de coupe (1) aux points (P1) et (P2),
- déterminer (115b, 115c) les angles d'inclinaison ($\beta$) et ($\gamma$) du premier bord (13) aux points (P2) et (P3) par rapport à l'axe longitudinal du tube (X),
- calculer (116b, 116c) les distances radiales (A2) et (A3) entre les points (P2) et (P3) et le diamètre de cône maximal (D1) d'un raccord de vissage de la bague de coupe (1),
- calculer (117b, 117c) les distances (E2) et (E3) avec prise en compte des angles d'inclinaison ($\beta$) et ($\gamma$) du premier bord (13) par rapport à l'axe longitudinal du tube (X) et des distances radiales (A2) et (A3), en particulier avec la fonction tangente,
- calculer (118b, 118c) les mesures de longueur (L2) et (L3) à partir de la somme des distances (C2) et (E2) et des distances (C3) et (E3),
- calculer (120) une profondeur de pénétration moyenne ($L_M$) à partir des mesures de longueur (L1, L2 et L3) .

**13.** Procédé (101) selon la revendication 12, **caractérisé en ce que** la profondeur de pénétration moyenne ($L_M$) est comparée (121) à au moins une valeur de référence.

**14.** Procédé (101) selon la revendication 12 ou 13, **caractérisé en ce qu'**une hauteur d'espace (M) est calculée (122) avec la profondeur de pénétration moyenne ($L_M$) et une profondeur de pénétration idéale (L) spécifique à la bague de coupe.

**15.** Dispositif (3) de vérification du pré-montage d'une bague de coupe (1) sur un tube (2), le dispositif comprenant au moins un moyen de détection (4) et au moins un moyen d'éclairage (6), le moyen d'éclairage (6) étant orienté sur le moyen de détection (4) de manière à former une zone de détection (5) entre le moyen d'éclairage (6) et le moyen de détection (4) et à détecter, à l'aide du dispositif (3), des données d'image d'un tube (2) pouvant être disposé dans la zone de détection (5) et pourvu d'une bague de coupe pré-montée (1),

**caractérisé en ce que** le dispositif (3) comprend un moyen de traitement de données qui est conçu et adapté pour évaluer au moins une partie des premières données d'image quant à une position de la bague de coupe (1) par rapport au tube (2) et/ou une modification géométrique du tube (2) et/ou une modification géométriquement de la bague de coupe (1).

16. Dispositif (3) selon la revendication 15, **caractérisé en ce que** le dispositif (3) est conçu et adapté pour mettre en œuvre un procédé (101) selon les revendications 1 à 14.

17. Dispositif (3) selon la revendication 15 ou 16, **caractérisé en ce que** le moyen de détection (4) est conçu comme une caméra ayant une résolution de 5 mégapixels, en particulier une précision de pixel comprise entre 3 $\mu$m et 6 $\mu$m.

18. Dispositif (3) selon l'une des revendications 15 à 17,
**caractérisé en ce que** le moyen de détection (4) comporte un objectif télécentrique (7) et/ou le moyen d'éclairage (6) est conçu comme un moyen d'éclairage télécentrique (6).

19. Dispositif de pré-montage destiné au pré-montage d'une bague de coupe (1) sur un tube (2), le dispositif comprenant un raccord de pré-montage destiné à recevoir le tube (2) et la bague de coupe (1),
**caractérisé en ce que** le dispositif de pré-montage comprend un dispositif (3) selon l'une des revendications 15 à 18, en particulier relié mécaniquement et/ou électriquement à un dispositif (3) selon l'une des revendications 15 à 18.

20. Progiciel destiné à la mise en œuvre d'un procédé selon l'une des revendications 1 ou 4 à 14.

101

102

103

104

Fig. 1

101

102

103

105

106

107

108

109

110

Fig. 2

Fig. 3

Fig. 4

EP 3 385 665 B1

Fig. 5

Fig. 6

EP 3 385 665 B1

Fig. 7

Fig. 8